# EUROPEAN PATENT SPECIFICATION

(11) **EP 1 989 824 B1**
(45) Date of publication and mention of the grant of the patent: **19.09.2018**
(21) Application number: 06716948.2
(22) Date of filing: 27.02.2006
(51) Int. Cl.: H04L 29/06, H04M 3/22

(54) **LAWFUL ACCESS; STORED DATA HANDOVER ENHANCED ARCHITECTURE**
RECHTMÄSSIGER ZUGRIFF, ERWEITERTE ARCHITEKTUR FÜR SPEICHERDATEN-HANDOVER
ACCES AUTORISE PAR LA LOI ; ARCHITECTURE AMELIOREE DE TRANSFERT INTERCELLULAIRE DE DONNEES MEMORISEES

(43) Date of publication of application: 12.11.2008
(73) Proprietor: Telefonaktiebolaget LM Ericsson (publ), 164 83 Stockholm (SE)
(72) Inventor: DE SANTIS, Raffaele, I-84085 Mercato San Severino (SA) (IT); IMBIMBO, Amedeo, I-80023 Caivano (NA) (IT); DE LUCA, Enrico, I-81100 Caserta (IT)
(74) Representative: Ericsson
(86) International application number: PCT/SE2006/000261
(87) International publication number: WO 2007/097667

(56) References cited:
- EP-A2- 1 460 876
- WO-A1-03/047205
- WO-A1-2005/025133
- US-A1- 2005 039 038
- US-A1- 2005 175 156
- "Telecommunications security; Handover interface for the request and delivery of retained data", ETSI DRAFT; 13LITD025_DTS_LI-00033_DR_HANODOVER_INTERF ACE_FOR_THE_REQ UEST_AND_DELIVERY_OF_RETAINED_DATA, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.0, 30 August 2006 (2006-08-30), pages 1-21, XP014050618, [retrieved on 2006-08-30]
- "Retained Data; Handover interface for the request and delivery of retained data", ETSI DRAFT; 14LITD020 DTS-LI00033 DATA RETENTION HI, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. v0.1.0, 15 January 2007 (2007-01-15), pages 1-19, XP014050641, [retrieved on 2007-01-15]

## Description

### TECHNICAL FIELD OF THE INVENTION

The present invention relates to methods in a telecommunication system to provide access to data received to a centralized storage medium from interfacing traffic nodes in the system.

### DESCRIPTION OF RELATED ART

Under data preservation schemes, law enforcement authorities have the opportunity to request electronic service providers to retain particular data on a particular person or persons, whereas data retention schemes provide the retention of traffic data on all users of electronic services. At first glance, data preservation seems an attractive policy option: the number of persons on whom data will be retained and processed for law enforcement purposes is drastically reduced under this option, and consequently the associated costs for industry will be negligible. In fact, data preservation is a very useful tool for law enforcement authorities. Undoubtedly, in those cases where a suspect has been identified, or where an investigation into for example an organised crime group or terrorism cell is underway, requests for preservation of traffic data are an indispensable tool to establish the connections between suspect and their contacts and associates. At the same time, the logical limitations of this approach can be easily explained - with only data preservation as a tool, it is impossible for investigators to go back in time. Data preservation is only useful as of the moment when suspects have been identified - data retention is indispensable in many cases to actually identify those suspects. Data preservation by itself is not enough for law enforcement authorities to actually be able to investigate and solve crime and terrorism cases. To respond to this concern, a number of states have adopted, or planned to adopt, national general data retention measures. Compared to data preservation measures, which are targeted at specific users and for specific data, general data retention measures aim at requiring (some or all) operators to retain traffic data on all users so that they can be used for law enforcement purposes when necessary and allowed.

A data gathering system in general is disclosed in the international patent application WO 00/05852. The international patent application discloses collection and integration of software that reside on multiple interconnected platforms to a single centralized storage medium. The increasing need for and use of traffic information and data in telecommunications system has increased the burdens and costs on service providers and law enforcement alike. Monitoring can be used to provide information from users. An Intercept Mediation and Delivery Unit IMDU used for data preservation belong to prior art and is disclosed in current Lawful Interception standards (see 3GPP TS 33.108 and 3GPP TS 33.107 - Release 6). The IMDU comprises a Law Enforcement Monitoring Function LEMF. The LEMF is connected to three Mediation Functions respectively for ADMF, DF2, DF3 i.e. an Administration Function ADMF and two Delivery Functions DF2 and DF3. The Administration Function and the Delivery Function DF2 are each one connected to the LEMF via standardized handover interfaces HI1 and HI2, and connected to an intercept access point via the interfaces X1 and X2. The messages sent from LEMF to ADMF via HI1 and from the ADMF to the network via the X1 interface comprise identities of a target that is to be monitored. The Delivery Function DF2 receives Intercept Related Information IRI from the network via the X2 interface, and DF2 is used to distribute the IRI to relevant Law Enforcement Agencies via the HI2 interface. The DF3 receives Content of Communication, i.e. speech and data and is connected to LEMF via a standardized interface HI3 and to the access point via an interface X3. Commonly the ADMF, DF2 and DF3 are parts of the service provider domain and located distinctly from the LEMF.

An array of different kinds of stored information and data may be the subject of lawful authorities requests, and may require different legal instruments. For example, some basic information may be made publicly available by the subscriber or may be highly intrusive and revealing of personal behaviour subject to privacy expectations. Such subscriber information and traffic data that are produced and transferred along the network during the normal traffic operation of the telecommunications networks, but the access to them by the external government authority is distributed over several different channels that makes it complicate to seek and rebuild the required information. The timely production and analysis of subscriber information and traffic data has become invaluable to service providers and government authorities for an array of needs related to critical infrastructure protection and the extraction of forensic evidence for law enforcement. The increasing need for and use of this information and data has increased the burdens and costs on service providers and law enforcement alike. At the other extreme, other information are not currently preserved by the telecommunication operator network either because not meaningful for billing purposes or because a post-processing is required at operator network premises. In some other cases, part of the information that is subject to order by the government authorities is not even available (e.g., correlation on subscriber basis of the several service identities the user could use). Examples of stored information and traffic data according to prior art is attached at the end of the description part of this application. To be noted is that the attached referenced framework not necessarily is limited to the mentioned cases, i.e. the type of identities provided in the solution are dependent on national options and can be extended by adding new network elements or new identities in existing network elements. An architecture for delivery of stored information from a Service provider to a lawful Enforcement Agency is disclosed in a draft standards ETSI DTR/LI-00020 V0.0.4 (2005-06).

The draft standards doesn't give a solution on how to collect all the required information in the network and how to correlate them. Even if this is not the core of this invention, in this document a detailed network framework with a centralized database is proposed as pre-requisite to the solution of the identified problems.

In synthesis, the identified lacks/problems of the current standards are:
1. the agencies cannot control the type of information to store, i.e. all information required by the standards are retained.
2. the current standard only foresees a simple provisioning method on demand of the stored data to the agencies (Query and Delivery processes), while it could be effective for lawful intercept purposes to deliver the retained information as soon as they become available.

### SUMMARY OF THE INVENTION

The present invention relates to problem how to control type of information to store in a centralized storage medium. A further problem is that the standards only foresee a simple provisioning method on demand of the stored data, while it could be effective for Lawful Intercept purposes to deliver the retained information as soon as they become available.

The problems are solved by the invention by filtering data received to the centralized storage medium, which filtered data is retained in the storage medium and/or forwarded to a Law enforcement Agency or similar.

The solution to the problems more in detail comprises a method in a telecommunication system to provide access to data received to a centralized storage medium from interfacing traffic nodes in the system. The centralized storage medium is part of a Mediation and Delivery Function which is associated with a Law Enforcement Agency. The method comprises the following steps:
- A configuration request, preferably received from a Law Enforcement Monitoring Facility handled by the Law Enforcement Agency, is identified in the Mediation and Delivery Function. The request comprises a filtering criteria specifying type of data to be further handled.
- The requested filtering criteria are configured in the Mediation and Delivery Function.
- Data that fulfils the requested filtering criteria is received from the system to the centralized storage medium.
- The received data is retained in the centralized storage medium and/or forwarded to the Law Enforcement Agency.

Thus, the object of the invention is to identify data to be accessed for Lawful Intercept purposes. This object and others are achieved by methods, arrangement, systems and articles of manufacture.

An advantage with the invention is that the enhanced system architecture and handover interfaces for data retention functionality lead to added value allowing managing the storage of any information in the network by mean of LI agency configuration.

Another advantage with the invention is that Data Retention and Lawful Intercept convergent architectures lead to: 1) The DR architecture can also be used for lawful interception purposes, like automatic notification of target related information as soon as stored for data retention purposes. 2) Similar interfaces towards the Public Land Mobile Network could be used for both DR and LI.

Further advantages with the invention is that Convergent Data Retention/Lawful Interception solutions will reduce the operations expenses (opex) and enhance overall efficiency and the flexible architecture can be used for fulfilment of any data retention requirements in terms of stored subscriber and traffic information and of their provisioning to agencies (not only query modality, but also push delivery), and furthermore similar interfaces towards the agencies could be used for both Data Retention and Lawful Interception.

### BRIEF DESCRIPTION OF THE DRAWINGS

Figure 1 discloses data collection from a Public Land Mobile Network to a centralized storage, and a block schematic illustration of a network based solution used for data handling according to the invention.
Figure 2 discloses a signal sequence diagram according to the invention for filtering data to be further handled.
Figure 3 discloses a signal sequence diagram according to the invention for realizing subscription of specified data.
Figure 4 shows a flow chart illustrating some essential steps of the invention.
Figure 5 discloses a block schematic illustration of a system according to the invention.

### DETAILED DESCRIPTION OF EMBODIMENTS

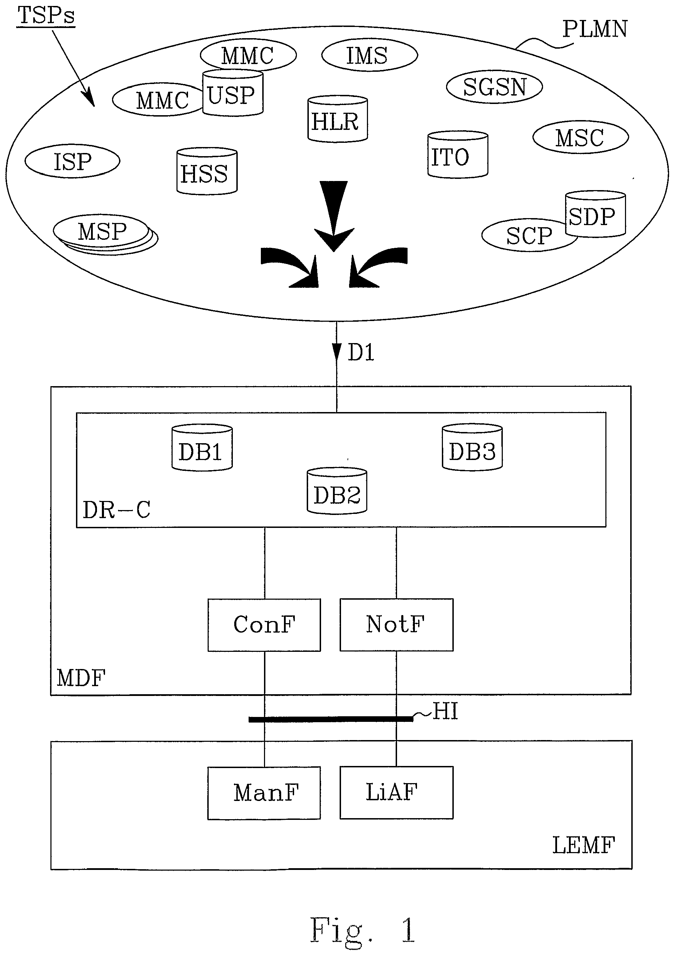

Figure 1 discloses a Public Land Mobile Network PLMN. The PLMN comprises in this example Telecommunication Service Providers TSPs such as MSP: Mobile Service Provider, ISP: Internet Service Provider, MMC: Multimedia Messaging Centre, USP: User and Service Profile Database, HSS: Home Subscriber server, HLR: Home Location register, IMS: IP Multimedia system, SGSN: Serving GPRS Support Node, ITO:IT Operator database, MSC: Mobile Services Switching Centre, SCP: Service Control Point, SDP: Service Data Point. The above nodes are all well known and specified in various telecommunication standards. Telecommunication Service Providers TSPs in the course of their business operations, normally acquire and store diverse subscriber information and traffic data related to their service providers. This information and data may be related to service accounts, payments, access, assigned identifiers, and usage. The manner of acquisition and storage of this information and data is determined by a combination of business practices, legal liability protection in case of subscriber disputes, technical system capabilities or requirements, and national and local law or regulation. Examples of information and traffic data according to prior art that can be sent from the system to the data Retention Cluster is attached at the end of the description part of this application. A Mediation and Delivery Function MDF is associated with the network PLMN and with a Law Enforcement Monitoring Facility LEMF. The MDF comprises according to the invention a Data Retention Cluster DR-C that in this example comprises three Data Bases DB1, DB2 and DB3. The cluster of Data Bases is illustrated in the proposal to be as much general as possible. Considering the large quantity of data most likely the implementation of Data Retention DR will foresee a possible distributed Data Base architecture with any kind of distribution (e.g. DB1 for the latest retention year, DB2 for earlier years or DB1 for Voice calls, DB2 for others etc.). The DR-C provides register functions to collect all possible data available in the PLMN to the cluster, when allowed by the telecommunication service. For example, the DR-C will collect MSISDN, IMSI and IMEI provided by the MSC, and will register them as referring to the same subject. Of course, the updating of the cluster depends on the policy regulating the notifications with the user, session or operator related data from the network elements towards the DB cluster (e.g. the notification could occur only at the first service access). The transportation of data from the PLMN to the Data Retention Cluster is schematically shown with filled arrows in figure 1. The transportation of data is a pre-requisite for this invention.

The Law Enforcement Monitoring Facility LEMF is handled by a Law Enforcement Agency. The general function of the LEMF is briefly explained in the Description of related art. For the purpose of this invention a new management function ManF and a new Lawful Interception acquisition function LiAF are introduced in the LEMF. A new configuration Function ConF is introduced in the Mediation and Delivery Function MDF. The ConF is associated with the DR-C in the MDF and with the ManF in the LEMF. A new Notification Function NotF in the MDF is introduced. The NotF is associated with the DR-C in the MDF and with the LiAF in LEMF. A new Handover Interface HI is located between the LEMF and the MDF. The purpose of the above new entities will be further explained in the embodiments.

A first embodiment of the invention will now be explained. In this embodiment filtering criteria will be determined by the Law Enforcement Monitoring Facility LEMF and sent to the MDF. Generally, the criteria stem from a search warrant or other authorization from a government or other authorized institution. In this example the criteria are sent from the LEMF but may also be communicated by an intermediary, such as a human operator who receives the command from an authorized source, and then inputs the criteria to the MDF. The filtering criteria specify which data to store and configure in the Data retention Cluster, for example in terms of:
- type of information: e.g., network operator related, subscriber related, communication type related.
- Subscriber identity: e.g. list or ranges of IMEI, IMSI, MSISDN, NAI, IP addresses.
- Information collection time window.
- Storage duration.
- Geographical locations.
- Service type: Speech, Video, Chat, Peer-to-peer,...
- Any other filtering criteria.

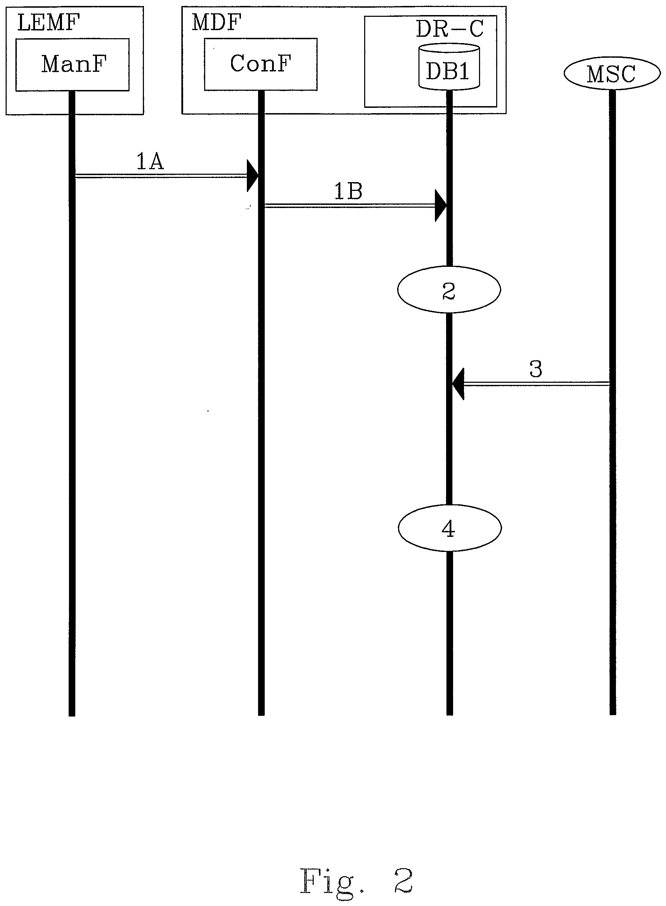

Figure 2 discloses a method according to the first embodiment of the invention. The different entities LEMF, ManF, MDF, ConF, DR-C, DB1 and MSC in figure 2 corresponds to the ones that already have been have been shown in figure 1. The method according to the invention comprises the following steps:
- A data retention storage configuration request is sent 1A from the Management Function ManF in the Law Enforcement Monitoring Facility LEMF to the Configuration Function ConF in the Mediation and Delivery Function MDF. The configuration request comprises in this example a retention request indicating that data fulfilling configured filtering criteria are to be stored in the in the centralized storage medium. The retention request can for example be represented by "storage duration > 0" in the filter criteria. The request in this example comprises the following filtering criteria:
   - **Type of information:** network operator related AND subscriber related AND communication type related. With the example of Call Data Records CDR from the MSC, type of communication could be voice, SMS or data. So if the filtering criteria indicated voice, only voice related CDR is to be accessed.
   - **Subscriber identity:** any IMEI, any IMSI, any MSISDN, any NAI, specific IP address ranges. With this example, the MSC will report either one of MSIDN, IMSI or IMEI, so any sub identity is retained. In case of nodes reporting the IP address, only CDR corresponding to IP addresses within the range is to be accessed.
   - **Information collection time window:** from 2005-12-01 h 00:00 to 2006-12-31 h 00:00 means that from 2005-12-01 h 00:00 to 2006-12-31 h 00:00 only CDR or any other retrieved info within such time period is to be accessed.
   - **Storage duration:** 3 years, meaning that after 3 years the info shall be deleted.
   - **Geographical locations:** Specified jurisdiction regions. Let's for example consider an MSC serving two states, the agency could have authority only on one state, so the info are to be accessed only if the MSC reports that the call was generated by a cell within that state.
   - **Service type:** Any.

This is an example of a filter from one agency. The system will access certain data if it is requested at least by one agency (i.e. if it matches with the criteria of at least one agency).
- The data retention storage configuration request including the received filtering criteria is forwarded 1B from the Configuration Function ConF to storage 2 in the Mediation and Delivery Function MDF, for example in DB1. The storage could also be a memory space in a processor unit in the MDF.
- Call related billing data is sent 3 from the Mobile Services Switching Centre MSC to the MDF.
- The received billing data is checked against stored filtering criteria received from the Law Enforcement Monitoring Facility LEMF. In this example the billing data fulfils all criterions in the filtering criteria.
- The data retention storage configuration request stored in the MDF is checked. The indication that data fulfilling configured filtering criteria are to be stored in the centralized storage medium is noted in the MDF and the received billing data is stored/retained 4 in the data base DB1. Once the received information matching the configured filtering criteria is retained, the Agency who sent the filtering criteria can order the acquisition of the data via the Notification Function and via the Lawful Intercept acquisition Function at any time. The acquisition order is sent to MDF via the management function and the configuration function. In an alternative embodiment different agencies can send different filtering criteria to the MDF. Data that fulfils a stored criterion will in that case upon request be sent to the agency who specified the criterion.

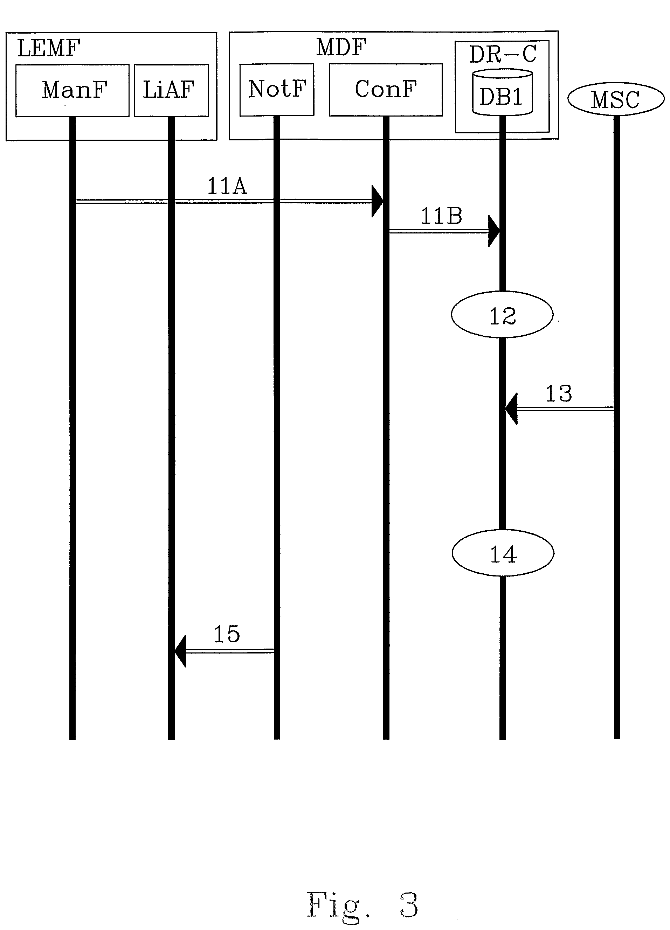

Figure 3 discloses a method according to a second embodiment of the invention. In this embodiment filtering criteria sent from the Law Enforcement Monitoring Facility LEMF will determine which information obtained from the system, the agency wants to subscribe to, and possibly also retain. The different entities LEMF, ManF, LiAF, MDF, NotF, ConF, DR-C, DB1 and MSC in figure 3 corresponds to the ones that already have been have been disclosed in figure 1. The method according to the invention comprises the following steps:
- A data retention storage configuration request is sent 11A from the Management Function ManF in the Law Enforcement Monitoring Facility LEMF (handled by an agency) to the Configuration Function ConF in the Mediation and Delivery Function MDF. The configuration request in this example comprises the same filtering criteria as in the first embodiment. The request also comprises a demand, a so called subscriber request, to subscribe to data fulfilling the criteria.

- The data retention storage configuration request is forwarded 11B from the Configuration Function ConF to the data Retention Cluster DR-C.
- The received filtering criteria are stored 12 in the Mediation and Delivery Function MDF, for example in DB1.
- Multi Media Messaging Services MMS data is in this example sent 13 from the Mobile Services Switching Centre MSC to the DR-C.
- The received MMS data is checked in the MDF against stored filtering criteria received from the Law Enforcement Monitoring Facility LEMF.
- The data fulfils the filtering criteria.
- The data retention storage configuration request stored in the MDF is checked. The indication that data fulfilling configured filtering criteria is to be subscribed by the LEMF, is detected in the MDF and the received MMS data is forwarded 15 to the LEMF without being stored, via the Notification Function NotF and via the Lawful Intercept acquisition Function LiAf.

The request 11A sent by the agency from the Manage function ManF in LEMF to the Configuration Function ConF may also comprise a desire for retention of data. In that case, data fulfilling stored criterion will not only be forwarded but also stored in a Data Base in the cluster DR-C. If the agency requested "notification only" by a so-called notification request in 11A then only an indication is notified to the LEMF, else a notification including the target related information, i.e. the data matching the filter, is forwarded. It is for example also possible to give access to specified data in the system to users with certain rights (or roles with different enabled functions). Users with these rights (or with a role allowing the functions of) are aloud to set the filtering criteria used to retain information. Other users are aloud to order query of the information. The first could for example be a minister of the Justice (as the filtering criteria for the retained information depend on the national law). The second may be used when accessing to the system by a specified client in the lawful agencies. This check of access rights may take place in the Mediation and Delivery Function upon receiving a configuration request or an acquisition order.

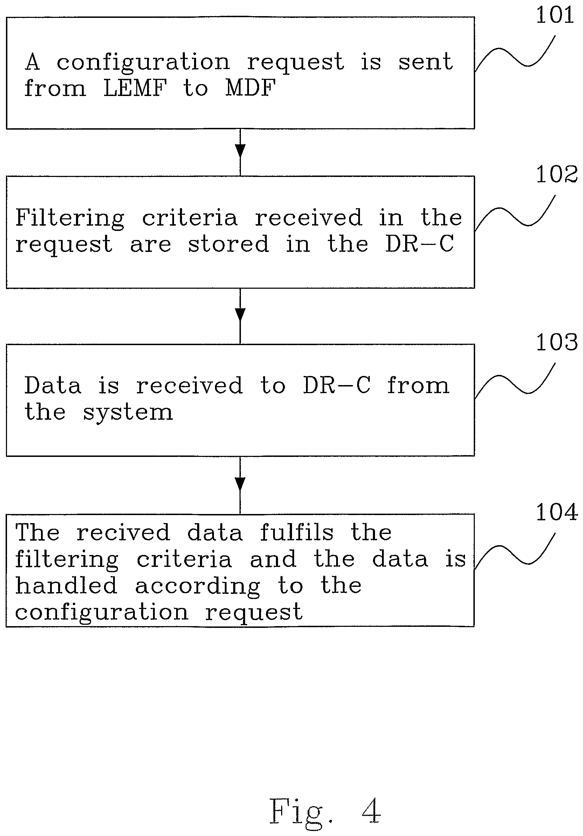

Figure 4 discloses a flowchart in which some important steps are shown. The flowchart is to be read together with the earlier shown figures. The flowchart comprises the following steps:
- The data retention storage configuration request is sent from the Management Function ManF to the Mediation and Delivery Function MDF. A block 101 discloses this step in figure 4.
- The received filtering criteria are stored in the Mediation and Delivery Function MDF. A block 102 discloses this step in figure 4.
- Data is sent from the Mobile Services Switching Centre MSC to the Data Retention Cluster DR-C. A block 103 discloses this step in figure 4.
- The data is checked against stored filtering criteria received from the Law Enforcement Monitoring Facility LEMF. The data fulfils the filtering criteria and the received data is handled according to the configuration request. A block 104 discloses this step in figure 4.

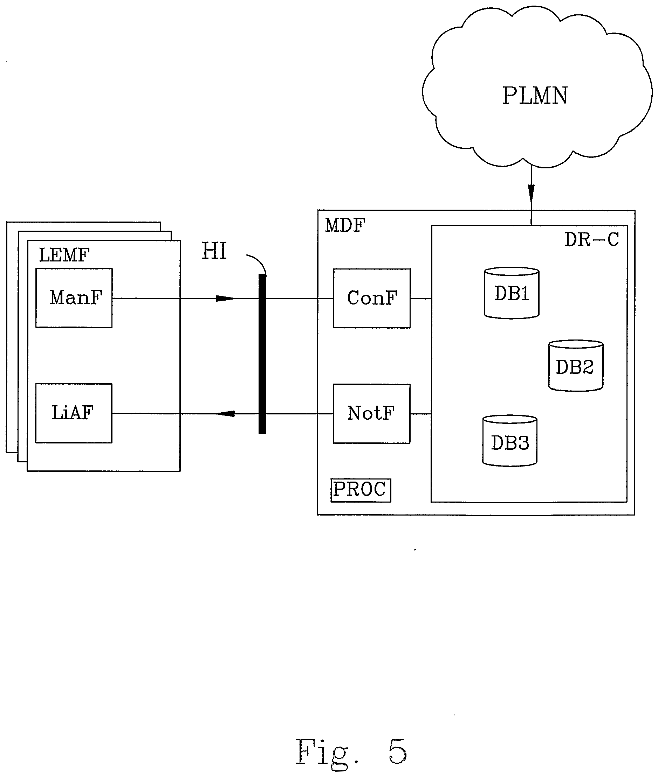

A system that can be used to put the invention into practice is schematically shown in figure 5. The block schematic constellation corresponds to the one disclosed in figure 1. A processor PROC in the Mediation and Delivery Function MDF handles the control of data from the Public Land Mobile Network PLMN and of the configuration request information received from the LEMF. The processor handles storage of received data from the PLMN to the centralized storage medium DB1-DB3 and also storage of received filtering criteria and potentially additional requests from the LEMF. The storage can for example be a memory space within the processor. The comparison of filtering criteria and PLMN data is also handled by the processor. The MDF is connected to the network PLMN and to at least one Law Enforcement Monitoring Facility LEMF. A Request Function ManF in the Law Enforcement Monitoring Facility LEMF is attached to a Receipt Function ConF in the Mediation and Delivery Function MDF, which function pair is used for query processes. A Response function NotF in the Mediation and Delivery Function is attached to an Acquisition Function LiAF in the Law Enforcement Monitoring Facility, which function pair is used for delivery processes. The Handover Interface HI is located between the Request Function and the Receipt Function and between the Response Function and the Acquisition Function. Enumerated items are shown in the figure as individual elements. In actual implementations of the invention, however, they may be inseparable components of other electronic devices such as a digital computer. Thus, actions described above may be implemented in software that may be embodied in an article of manufacture that includes a program storage medium. The program storage medium includes data signal embodied in one or more of a carrier wave, a computer disk (magnetic, or optical (e.g., CD or DVD, or both), non-volatile memory, tape, a system memory, and a computer hard drive.

The invention is not limited to the above described and in the drawings shown embodiments but can be modified within the scope of the enclosed claims. The systems and methods of the present invention may be implemented on any of the Third Generation Partnership Project (3GPP), European Telecommunications Standards Institute (ETSI), American National Standards Institute (ANSI) or other standard telecommunication network architecture, consistent with the Communications Assistance for Law Enforcement Act (CALEA), which is a United States law requiring telephone network architectures be designed to enable authorized electronic interception.

The invention is of course not limited to the above described and in the drawings shown embodiments but can be modified within the scope of the enclosed claims.

Examples of stored data elements possible to send from the nodes in the system to the centralized Data retention Cluster:

| **Association** | **Stored Data Element** | **Description** | **Network Element / DB** |
|---|---|---|---|
| provider records | provider name | | DR DB Configuration Data |
| | provider address | | DR DB Configuration Data |
| | provider network identifier | | DR DB Configuration Data |
| | provider regulatory identifier | | DR DB Configuration Data |
| | provider other identifiers | | DR DB Configuration Data |
| | provider law enforcement agency identifier | | DR DB Configuration Data |
| | provider contact name | | DR DB Configuration Data |
| | provider contact address | | DR DB Configuration Data |
| | | | |
| subscriber records | subscriber name | | IT Operator DB |
| | subscriber status | current, former, limbo, roamer, prepaid, transient | IT Operator DB |
| | subscriber account creation timestamp | | IT Operator DB |
| | subscriber account support event | | IT Operator DB |
| | subscriber account support event timestamp | | IT Operator DB |
| | subscriber account support event description | | IT Operator DB |
| | subscriber address | | IT Operator DB |
| | subscriber contact name | | IT Operator DB |
| | subscriber contact address | | IT Operator DB |
| | subscriber account identifier | | IT Operator DB |
| | subscriber date of birth | | IT Operator DB |
| | subscriber identity type | e.g., Social Security Number, driver's license | IT Operator DB |
| | subscriber identity identifier | | IT Operator DB |
| | subscriber payment account type | e.g, credit card, bank | IT Operator DB |
| | subscriber payment institution identifier | | IT Operator DB |
| | subscriber payment institution name | | IT Operator DB |
| | subscriber payment institution address | | IT Operator DB |
| | subscriber payment account identifier | | IT Operator DB |
| | subscriber payment account name | | IT Operator DB |
| | subscriber payment account address | | IT Operator DB |
| | subscriber payment account expiration date | | IT Operator DB |
| | subscriber other identifiers | | IT Operator DB |
| | subscriber dealer name | where an intermediary party exists | IT Operator DB |
| | subscriber dealer address | | IT Operator DB |
| | subscriber dealer account identifier for subscriber | | IT Operator DB |
| | subscriber billed party name | | IT Operator DB |
| | subscriber billed party address | | IT Operator DB |
| | subscriber billing account identifier | | IT Operator DB |
| | subscriber previous billing address | | IT Operator DB |
| | subscriber installation address | | IT Operator DB |
| | subscriber transient access location | phone booth, hotspot, voyage identifier | IT Operator DB |
| | subscriber transient access timestamp | | IT Operator DB |
| | subscriber Object Identifier (OID) | when subscriber is an object | IT Operator DB |
| | subscriber collateral identifiers | e.g. aircraft or train assigned seat number | IT Operator DB |
| network-session identifier records | network E.164 telecommunications number | includes telephony, fax, dialup data, ENUM | ISP NAS, Fixed Net., Messaging Servers |
| | network Location Routing Number (LRN) | | CS Nodes, GPRS |
| | network Mobile Subscriber ISDN (MSISDN) | | GPRS, CS Nodes, Messaging Servers |
| | network International Mobile Subscriber Identifier (IMSI) | | GPRS, CS Nodes, Messaging Servers |
| | network Urban Fleet Member Identifier (UFMI) | | |
| | network Internet Protocol address | | |
| | network Internet domain name | | |
| | network ENUM Fully Qualified Domain Name (FQDN) identifier | | |
| | network Uniform Resource Identifier (URI) | | |
| | network File Transfer Protocol (FTP) identifier | | |
| | network Session Initiation Protocol (SIP) identifier | | |
| | network H.323 identifier | | |
| | Hypertext Transfer Protocol Secure (HTTPS) identifier | | |
| | network session access password | | |
| | | | |
| service equipment records | service equipment vendor and model | | DCR |
| | service equipment physical serial number | | DCR |
| | service equipment international Mobile | | DCR, EIR |
| | Equipment identifier (IMEI) | | |
| | service equipment Electronic Product or Serial Number (EPN, ESN) | | |
| | service equipment Mobile Equipment IDentifier (MEID) | a 56-bit mobile equipment identifier used for new terminals as the alternative to the 32-bit ESN | |
| | service equipment pseudo-ESN (pESN) | a Pseudo-ESN 0x80 as its 'Manufacturer Code', followed by the 24 least significant bits of the SHA-1 hash of the 56 bit MEID is used when MEID isn't implemented in a system | |
| | service equipment Mobile Identification Number (MIN) | | |
| | service equipment Network media access identifier (MAC) | | ISP NAS |
| | service equipment digital certificate | | |
| | | | |
| porting records | Location Routing Number (LRN) | | Number Portability Swtiching Node (e. SCP) |
| | Jurisdiction Information Parameter (JIP) | | Number Portability Swtiching Node (e. SCP) |
| | Mobile Directory Number (MDN) | | Number Portability Swtiching Node (e. SCP) |
| | SOA E.164 Dialed Number (DN) | | Number Portability Swtiching Node (e. SCP) |
| | SOA subscriber port request received timestamp | | Number Portability Swtiching Node (e. SCP) |
| | SOA subscriber port request transmitted to national portability database system timestamp | | Number Portability Swtiching Node (e. SCP) |
| | | | |
| telephony usage detail records | Telephone CDR telephony identifier | | BGW |
| | Telephone CDR account identifier | | BGW |
| | Telephone CDR source (switch, subscriber database, archive) | | BGW |
| | Telephone CDR IMSI/MSISDN/IMEI mappings | | BGW |
| | Telephone CDR Record of mobile stored or dynamic registration | | BGW |
| | Telephone CDR start of call timestamp | | BGW |
| | Telephone CDR end of call timestamp | | BGW |
| | Telephone CDR duration of call | | BGW |
| | Telephone CDR type of call (incoming, outgoing, conference, forwarded, bearer) | | BGW |
| | Telephone CDR call number physical/presentational/network assigned Caller Line Identity (CLI) | | BGW |
| | Telephone CDR call number CLI type (physical, presentational, network assigned) | | BGW |
| | Telephone CDR call number Dialed Number identifier (DNI) | | BGW |
| | Telephone CDR call number International Mobile Subscriber Identifier (IMSI) | | BGW |
| | Telephone CDR call number International Mobile Equipment Identifier (IMEI) | | BGW |
| | Telephone CDR call number Urban Fleet Member identifier (UFMI) | | BGW |
| | Telephone CDR call number Conference/exchange/divert numbers | | BGW |
| | Telephone CDR identification numbers of connected end user device | | BGW |
| | Telephone CDR IMEI type (physical, presentational, network assigned) | | BGW |
| | Telephone CDR location data at start and/or end of call (lat/long reference or other) | | BGW |
| | Telephone CDR geographic location of end user device, | | BGW |
| | Telephone CDR cell site data during call | | BGW |
| | Telephone CDR cell site location | | BGW |
| | IMSI & Mobile Station Integrated Services Digital Network (MSISDN) global titles | global titles of equipment communicating with or about the subscriber | BGW |
| | | | |
| GPRS & 3G Call Detail Record Supplements | 3G encryption key sets of GSM triples | | AuC |
| | 3G encryption key sets of 3G quintuples | | AuC |
| | 3G encryption key any other provider keys | | AuC |
| | 3G CDR | [Translated and imported ETSI ASN.1 module "TS32215-DataTypes {itu-t 0 identified-organization 4 etsi 0 mobileDomain 0 umts-Operation-Maintenance3 ts-32-215 215 information Mode [0 asn1Module 2"], including | BGW |
| | 3G CDR start of connection timestamp | | BGW |
| | 3G CDR International Mobile Subscriber Identifier (IMSI) | | BGW |
| | 3G CDR IP address assigned | | BGW |
| | 3G CDR mobile data exchanged with foreign operators | | BGW |
| | | | |
| Short Message Service (SMS), | MSD message sent timestamp | | Messaging Service Provider (e.g. SMS-C, MMC) |
| Enhanced Messaging Service (EMS) and Multimedia Messaging Service (MMS) MessageDetail Records | | | |
| | MSD message delivered timestamp | | Messaging Service Provider (e.g. SMS-C, MMC) |
| | MSD message received timestamp | | Messaging Service Provider (e.g. SMS-C, MMC) |
| | MSD calling number | | Messaging Service Provider (e.g. SMS-C, MMC) |
| | MSD calling number IMEI | | Messaging Service Provider (e.g. SMS-C, MMC) |
| | MSD called number | | Messaging Service Provider (e.g. SMS-C, MMC) |
| | MSD called number IMEI | | Messaging Service Provider (e.g. SMS-C, MMC) |
| | MSD location data when messages sent and received (lat/long reference or grid) | | Messaging Service Provider (e.g. SMS-C, MMC) |
| | | | |
| Instant Message Service records | Instant Messenger name | | Messaging Service Provider (e.g. SMS-C, MMC) |
| | Instant Messenger password | | Messaging Service Provider (e.g. SMS-C, MMC) |
| | | | |
| Presence and Availability Management Services | Geolocation-time correlations | for devices, applications, subscribers | Messaging Service Provider (Presence Server) |
| | Availability algorithms | | Messaging Service Provider (Presence Server) |
| | Collateral identifiers | e.g. actual aircraft or train assigned seat number | Messaging Service Provider (Presence Server) |
| | Buddy lists | | Messaging Service Provider (Presence Server) |
| | Availability messages | | |
| | | | |
| eMail System Usage Detail Records | eMail address | | E-Mail Server |
| | eMail Internet Message Access Protocol (IMAP) identifier | | E-Mail Server |
| | eMail Post Office Protocol (POP) identifier | | E-Mail Server |
| | eMail server-server protocol | SMTP, X.400, other | E-Mail Server |
| | eMail server-user client protocol | SMTP/POP, IMAP, HTTP, SSL, SSH, other | E-Mail Server |
| | eMail server type | provider MX, backup MX or remote MX server | E-Mail Server |
| | eMail server disposition of outbound bounced messages | | E-Mail Server |
| | eMail server disposition of inbound bounced messages | | E-Mail Server |
| | eMail server SNMP data available | | E-Mail Server |
| | eMail subscriber account user name | | E-Mail Server |
| | eMail subscriber account privileges | | E-Mail Server |
| | eMail subscriber account management protocol | e.g., http | E-Mail Server |
| | eMail subscriber account management URI | | E-Mail Server |
| | eMail subscriber account user digital certificate | | E-Mail Server |
| | eMail subscriber account auto response message | | E-Mail Server |
| | eMail server subscriber access login timestamp | | E-Mail Server |
| | eMail server subscriber access logout timestamp | if session | E-Mail Server |
| | eMail server subscriber IP address used for access | | E-Mail Server |
| | eMail server subscriber access security protocol | | E-Mail Server |
| | eMail server subscriber account user digital certificate | | E-Mail Server |
| | eMail server subscriber user application client used for access | | E-Mail Server |
| | eMail server subscriber account management feature type | | E-Mail Server |
| | | | |
| eMail Message Detail Records | eMail server subscriber account feature set timestamp | | E-Mail Server |
| | eMail message action | sent, retrieved, received, autoforwarded | E-Mail Server |
| | eMail message server timestamp | | E-Mail Server |
| | eMail message sender IP address | | E-Mail Server |
| | eMail message sender or relay host DNS Fully Quaified Domain Name or X.400 domain name | | E-Mail Server |
| | eMail message sending or relay host IP or other network address | | E-Mail Server |
| | eMail message account user name | | E-Mail Server |
| | eMail message message identifier | | E-Mail Server |
| | eMail message envelope timestamp | | E-Mail Server |
| | eMail message envelope "to" eMail addresses | including all related types, e.g., cc, bcc, fcc, Icc | E-Mail Server |
| | eMail message envelope "return to" eMail address | | E-Mail Server |
| | eMail message envelope "from" eMail address | | E-Mail Server |
| | eMail message message size | | E-Mail Server |
| | eMail message attachment indicators | | E-Mail Server |
| | eMail message envelope digital certificate | if signed or encrypted | E-Mail Server |
| | eMail message forwarded email address | | E-Mail Server |
| | eMail message sent forwarded IP address | | E-Mail Server |
| | eMail message forwarded timestamp | | E-Mail Server |
| | eMail message Iterations to message headers or content rewrite tables used | | E-Mail Server |
| | eMail message alterations to message headers or content retention time of rewrite tables | | E-Mail Server |
| | | | |
| directory records | directoryMobile Directory Number (MDN) | | IT Operator DB |
| | directory Lightweight Directory Access Protocol (LDAP) identifier | | IT Operator DB |
| | directory X.500 identifier | | IT Operator DB |
| | directory IRIS identifier | | IT Operator DB |
| | directory Finger identifier | | IT Operator DB |
| | directory other | | IT Operator DB |
| | | | |
| security application records | PKI public key identifier | | AAA |
| | key passwords | | AAA |
| | | | |
| Internet Access System Usage Detail Records | eMail message alterations to message headers or content associated information retained | | ISP NAS |
| | Internet access system access type | dialup, hotspot, always-on | ISP NAS |
| | Internet access system connection protocol | | ISP NAS |
| | Internet access system access timestamp | | ISP NAS |
| | Internet access system dropped timestamp | | ISP NAS |
| | Internet access system authentication user name | | ISP NAS |
| | Internet access system password | | ISP NAS |
| | Internet access system authentication certificate | | ISP NAS |
| | Internet access system access IP address assigned | | ISP NAS |
| | Internet access system connection speed | | ISP NAS |
| | Internet access system subscriber Calling Line Identifier (CLI) | | ISP NAS |
| | Internet access system provider terminal server dialup number | | ISP NAS |
| | Internet access system ADSL end point | | ISP NAS |
| | Internet access system MAC address | | ISP NAS |
| | Internet access system IPSEC or other tunnels | | ISP NAS |
| | Internet access system security tunnel authentication user name | | ISP NAS |
| | Internet access system security tunnel log-in timestamp | | ISP NAS |
| | | | |
| Internet Service System Detail Records | Internet access system security tunnel IP address connecting to tunnel | | ISP NAS |
| | Internet service type | WWW, FTP, DNS, LDAP, | ISP NAS |
| | Internet service access type | provider, customer, shared, agent | ISP NAS |
| | Internet service access proxy configuration | in use, fixed, end user configurable | ISP NAS |
| | Internet service access ports | | ISP NAS |
| | Internet service resource record | | ISP NAS |
| | Internet service NAPTR resolution | If resource record is NAPTR | ISP NAS |
| | | | |
| Internet Service Usage Detail Records | Internet service firewall or autoforwarding identifier | | ISP NAS |
| | Internet service usage type | WWW, FTP, DNS, LDAP, Whois, Rwhois, SIP, H.323 | ISP NAS |
| | Internet service usage timestamp | | ISP NAS |
| | Internet service usage IP address | | ISP NAS |
| | Internet service usage reverse DNS resolution name | | ISP NAS |
| | Internet service query input information | | ISP NAS |
| | Internet service usage digital certificate | | ISP NAS |
| | Internet service returned information | includes files downloaded, information returned | ISP NAS |
| | Internet service usage information uploaded | Records, response messages or files uploaded | ISP NAS |
| | Internet service usage feature change | | ISP NAS |
| | Internet service usage reverse connection IP address | | ISP NAS |
| | | | |
| Roaming System and Detail Records | Internet service usage reverse data transferred to visitor host (e.g., cookie) | | HSS |
| | roaming detail record access timestamp | | HLR/HSS |
| | roaming detail record IMSI data request | | HLR |
| | roaming detail record IMSI data returned | | HLR |
| | roaming detail record MSISDN data request | | HLR |
| | | | |
| Prepaid Service | roaming detail record MSIDFN data returned | | IN, BGW |
| System | Prepaid Service method of activation | | IN, BGW |
| | Prepaid Service activation timestamp | | IN, BGW |
| | | | |
| Prepaid Service Call Detail Records | Prepaid Service activation means | | IN, BGW |
| | prepaid service call start timestamp | | IN, BGW |
| | prepaid service call end timestamp | | IN, BGW |
| | prepaid service call type of service | | IN, BGW |
| | prepaid service call user identification | | IN, BGW |
| | prepaid service call associated number | | IN, BGW |
| | | | |
| billing records | billing account name | | BGW |
| | billing account identifier | | BGW |
| | billing statement date timestamp | | BGW |
| | billing period start timestamp | | BGW |
| | billing period stop timestamp | | BGW |
| | billing line item | | BGW |
| | billing access and other charges | | BGW |
| | billing total amount | | BGW |
| | billing associated image file identifier | | BGW |
| | | | |
| payment records | payment received timestamp | | BGW |
| | payment billing reference | | BGW |
| | payment received amount | | BGW |
| | payment instrument type | | BGW |
| | subscriber payment institution identifier | | BGW |
| | subscriber payment institution name | | BGW |
| | subscriber payment institution address | | BGW |
| | subscriber payment account identifier | | BGW |
| | subscriber payment account name | | BGW |
| | subscriber payment account address | | BGW |
| | | | |
| Management Information Base records | [specification mechanism needed] | (data elements available through the network management framework. See IETF STD 58, RFC3410) | OSS |
| | | | |
| Collateral System and Detail Data | prepaid service call location | | |
| | Retention relative to data to which it is related | | |
| | Data needed to interpret other communications data | for example -the mapping between cell mast identifiers and their location | |
| | | | |
| Stored content (including voicemail, eMail and SMS) | translation of dialing | as supported by IN networks | Messaging Service Provider (e.g. SMS-C, MMC) |
| | Stored content type | voicemail, eMail and SMS | Messaging Service Provider (e.g. SMS-C, MMC) |
| | Stored content stored messages available | | Messaging Service Provider (e.g. SMS-C, MMC) |
| | Stored content access location | | Messaging Service Provider (e.g. SMS-C, MMC) |
| | Stored content access code | | Messaging Service Provider (e.g. , SMS-C, MMC) |
| | Stored content length of time messages are stored | | |
| | | | |
| forensic information | Stored content length of storage after access | | Stored in DR DB Unit |
| | Timestamp offset | Measured offset of furnished timestamp values during the same hour as collected NTPQ offset value determined against a public NTP primary or secondary time server | Stored in DR DB Unit |

## Claims

1. Method to provide access to data received to a centralized storage medium being part of a Mediation and Delivery Function (MDF) which is associated with a Law Enforcement Monitoring facility (LEMF) in a telecommunication system from interfacing traffic nodes in the system, which method comprises the following steps:
- identifying in the Mediation and Delivery Function (MDF), a configuration request which comprises a filtering criteria specifying type of data to be accessed;
- configuring in the Mediation and Delivery Function (MDF), the requested filtering criteria;
- receiving data (D1) from the system to the centralized storage medium;
- establishing that the received data matches the filtering criteria;
- retaining the received data in the centralized storage medium and/or forwarding the data to the Law Enforcement Monitoring Facility.

2. Method to provide access to data received to the centralized storage medium according to claim 1, which configuration request further comprises a retention request indicating that data fulfilling the configured filtering criteria are to be stored in the centralized storage medium.

3. Method to provide access to data received to the centralized storage medium according to claim 1 or 2, which configuration request is received from the Law Enforcement Monitoring Facility (LEMF) and which request further comprises a subscription request indicating that data fulfilling the configured filtering criteria are to be forwarded to the Law Enforcement Monitoring facility.

4. Method to provide access to data received to the centralized storage medium according to claim 3, which subscription request further comprises a notification request indicating that only a notification of data fulfilling the configured filtering criteria are to be forwarded to the Law Enforcement Monitoring facility (LEMF).

5. Method to provide access to data received to the centralized storage medium according to claim 2, which configuration request is received from the Law Enforcement Monitoring Facility (LEMF) and which method comprises the following further steps:
- receiving to the Mediation and Delivery Function (MDF) from the Law Enforcement Monitoring Facility, an acquisition order to acquire the retained data (D1);
- forwarding the data (D1) from the Mediation and Delivery Function (MDF) to the Law Enforcement Monitoring Facility.

6. Method to provide access to data received to the centralized storage medium according to claim 5 whereby a check of access rights takes place in the Mediation and Delivery Function (MDF) upon receiving a configuration request or an acquisition order.

7. Arrangement to provide access to data received to a centralized storage medium being part of a Mediation and Delivery Function (MDF) which is associated with a Law Enforcement Monitoring facility (LEMF) in a telecommunication system from interfacing traffic nodes in the system, which arrangement comprises:
- means for identifying in the Mediation and Delivery Function (MDF), a configuration request which comprises a filtering criteria specifying type of data to be accessed;
- means for configuring in the Mediation and Delivery Function (MDF), the requested filtering criteria;
- means for receiving data (D1) from the system to the centralized storage medium;
- means for establishing that the received data matches the filtering criteria;
- means for retaining the received data in the centralized storage medium and/or forwarding the data to the Law Enforcement Monitoring Facility.

8. Arrangement to provide access to data received to the centralized storage medium according to claim 7, which configuration request is received from the Law Enforcement Monitoring Facility (LEMF) and which arrangement further comprises:
- means for receiving to the Mediation and Delivery Function (MDF) from the Law Enforcement Monitoring Facility, an acquisition order to acquire the retained data (D1);
- means for forwarding of the data (D1) from the Mediation and Delivery Function (MDF) to the Law Enforcement Monitoring Facility.

9. Arrangement to provide access to data received to the centralized storage medium according to claim 7 or 8, which arrangement further comprises:
- A Request Function (ManF) in the Law Enforcement Monitoring Facility (LEMF) attached to a Receipt Function (ConF) in the Mediation and Delivery Function (MDF), which function pair is used for query processes;
- A Response function (NotF) in the Mediation and Delivery Function attached to an Acquisition Function (LiAF) in the Law Enforcement Monitoring Facility, which function pair is used for delivery processes.

10. Arrangement to provide access to data received to the centralized storage medium according to claim 8, which arrangement further comprises a Handover Interface (HI) between the Request Function and the Receipt Function and between the Response Function and the Acquisition Function.

11. Arrangement to provide access to data received to the centralized storage medium according to claim 7 or 8 which arrangement comprises means to check access rights in the Mediation and Delivery Function (MDF) upon receiving a configuration request or an acquisition order.

12. Article for manufacture comprising a program storage memory having computer readable program code embodied therein for providing access to data received to a centralized storage medium being part of a Mediation and Delivery Function (MDF) which is associated with a Law Enforcement Monitoring Facility (LEMF) in a telecommunication system from interfacing traffic nodes in the system, the computer readable program code in the article of manufacture comprising:
- computer readable program code identifying in the Mediation and Delivery Function (MDF), a configuration request which comprises a filtering criteria specifying type of data to be accessed;
- computer readable program code for storing in the Mediation and Delivery Function (MDF), the requested filtering criteria;
- computer readable program code for receiving data (D1) from the system to the centralized storage medium;
- computer readable program code for establishing that the data matces the configured filtering criteria;
- computer readable program code for retaining the received data (D1) in the centralized storage medium and/or forwarding the data to the Law Enforcement Monitoring Facility.

## Patentansprüche

1. Verfahren, um Zugang zu Daten bereitzustellen, die an einem zentralen Speichermedium erhalten wurden, das Bestandteil einer Vermittlungs- und Übermittlungsfunktion (MDF) ist, die mit einer Rechtspflege-Überwachungseinrichtung (LEMF) in einem Telekommunikationssystem aus als Schnittstellen dienenden Verkehrsknoten im System in Zusammenhang steht,
wobei das Verfahren folgende Schritte umfasst:
- Identifizieren in der Vermittlungs- und Übermittlungsfunktion (MDF) einer Konfigurationsanfrage, die ein filterndes Kriterium umfasst, das den Typ der Daten, auf die zugegriffen werden soll, spezifiziert;
- Konfigurieren des angefragten filternden Kriteriums in der Vermittlungs- und Übermittlungsfunktion (MDF);
- Empfangen von Daten (D1) vom System an das zentralisierte Speichermedium;
- Ermitteln, dass die empfangenen Daten mit dem filternden Kriterium übereinstimmen;
- Aufbewahren der empfangenen Daten im zentralisierten Speichermedium und/oder Weiterleiten der Daten an die Rechtspflege-Überwachungseinrichtung.

2. Verfahren, um Zugang zu Daten bereitzustellen, die an einem zentralen Speichermedium erhalten wurden, nach Anspruch 1, wobei die Konfigurationsanfrage weiter umfasst eine Aufbewahrungsanfrage, anzeigend, dass Daten, die das konfigurierte filternde Kriterium erfüllen, im zentralisierten Speichermedium gespeichert werden sollen.

3. Verfahren, um Zugang zu Daten bereitzustellen, die an einem zentralen Speichermedium erhalten wurden, nach Anspruch 1 oder 2, wobei die Konfigurationsanfrage von der Rechtspflege-Überwachungseinrichtung (LEMF) empfangen wird, und wobei die Anfrage weiter umfasst eine Subscriptionsanfrage, anzeigend, dass Daten, die das konfigurierte filternde Kriterium erfüllen, an die Rechtspflege-Überwachungseinrichtung weitergeleitet werden sollen.

4. Verfahren, um Zugang zu Daten bereitzustellen, die an einem zentralen Speichermedium erhalten wurden, nach Anspruch 3, wobei die Subscriptionsanfrage weiter umfasst eine Mitteilungsanfrage, anzeigend, dass nur eine Mitteilung von Daten, die das konfigurierte filternde Kriterium erfüllen, an die Rechtspflege-Überwachungseinrichtung (LEMF) weitergeleitet werden soll.

5. Verfahren, um Zugang zu Daten bereitzustellen, die an einem zentralen Speichermedium erhalten wurden, nach Anspruch 2, wobei die Konfigurationsanfrage von der Rechtspflege-Überwachungseinrichtung (LEMF) empfangen wird, und wobei das Verfahren weiter folgende Schritte umfasst:
- Empfangen einer Erfassungsanweisung an der Vermittlungs- und Übermittlungsfunktion (MDF) von der Rechtspflege-Überwachungseinrichtung, um die aufbewahrten Daten (D1) zu erfassen;
- Weiterleiten der Daten (D1) von der Vermittlungs- und Übermittlungsfunktion (MDF) an die Rechtspflege-Überwachungseinrichtung.

6. Verfahren, um Zugang zu Daten bereitzustellen, die an einem zentralen Speichermedium erhalten wurden, nach Anspruch 5, wobei eine Prüfung der Zugangsberechtigungen in der Vermittlungs- und Übermittlungsfunktion (MDF) nach Empfangen einer Konfigurationsanfrage oder einer Erfassungsanweisung stattfindet.

7. Vorrichtung, um Zugang zu Daten bereitzustellen, die an einem zentralen Speichermedium erhalten wurden, das Bestandteil einer Vermittlungs- und Übermittlungsfunktion (MDF) ist, die mit einer Rechtspflege-Überwachungseinrichtung (LEMF) in einem Telekommunikationssystem aus als Schnittstellen dienenden Verkehrsknoten im System in Zusammenhang steht, wobei die Vorrichtung umfasst:
- Mittel zum Identifizieren in der Vermittlungs- und Übermittlungsfunktion (MDF) einer Konfigurationsanfrage, die ein filterndes Kriterium umfasst, das den Typ der Daten, auf die zugegriffen werden soll, spezifiziert;
- Mittel zum Konfigurieren des angefragten filternden Kriteriums in der Vermittlungs- und Übermittlungsfunktion (MDF);
- Mittel zum Empfangen von Daten (D1) vom System an das zentralisierte Speichermedium;
- Mittel zum Ermitteln, dass die empfangenen Daten mit dem filternden Kriterium übereinstimmen;
- Mittel zum Aufbewahren der empfangenen Daten im zentralisierten Speichermedium und/oder Weiterleiten der Daten an die Rechtspflege-Überwachungseinrichtung.

8. Vorrichtung, um Zugang zu Daten bereitzustellen, die an einem zentralen Speichermedium erhalten wurden, nach Anspruch 7, wobei die Konfigurationsanfrage von der Rechtspflege-Überwachungseinrichtung (LEMF) empfangen wird, und wobei die Vorrichtung weiter umfasst:
- Mittel zum Empfangen einer Erfassungsanweisung an der Vermittlungs- und Übermittlungsfunktion (MDF) von der Rechtspflege-Überwachungseinrichtung, um die aufbewahrten Daten (D1) zu erfassen;
- Mittel zum Weiterleiten der Daten (D1) von der Vermittlungs- und Übermittlungsfunktion (MDF) an die Rechtspflege-Überwachungseinrichtung.

9. Vorrichtung, um Zugang zu Daten bereitzustellen, die an einem zentralen Speichermedium erhalten wurden, nach Anspruch 7 oder 8, wobei die Vorrichtung weiter umfasst:
- eine Anfragefunktion (ManF) in der Rechtspflege-Überwachungseinrichtung (LEMF), die an eine Empfangsfunktion (ConF) in der Vermittlungs- und Übermittlungsfunktion (MDF) angebunden ist, wobei das Funktionspaar für Abfrageprozesse verwendet wird;
- eine Antwortfunktion (NotF) in der Vermittlungs- und Übermittlungsfunktion, die an eine Erfassungsfunktion (LiAF) in der Rechtspflege-Überwachungseinrichtung angebunden ist, wobei das Funktionspaar für Übermittlungsprozesse verwendet wird.

10. Vorrichtung, um Zugang zu Daten bereitzustellen, die an einem zentralen Speichermedium erhalten wurden, nach Anspruch 8, wobei die Vorrichtung eine Handover-Schnittstelle (HI) zwischen der Anfragefunktion und der Empfangsfunktion und zwischen der Antwortfunktion und der Erfassungsfunktion umfasst.

11. Vorrichtung, um Zugang zu Daten bereitzustellen, die an einem zentralen Speichermedium erhalten wurden, nach Anspruch 7 oder 8, wobei die Vorrichtung Mittel zum Prüfen von Zugangsberechtigungen in der Vermittlungs- und Übermittlungsfunktion (MDF) nach Empfangen einer Konfigurationsanfrage oder einer Erfassungsanweisung umfasst.

12. Herstellungsgegenstand, umfassend einen Programmspeicher, der einen hierin ausgebildeten rechnerlesbaren Programmcode aufweist, zum Bereitstellen von Zugang zu Daten, die an einem zentralen Speichermedium erhalten wurden, als Bestandteil einer Vermittlungs- und Übermittlungsfunktion (MDF), die mit einer Rechtspflege-Überwachungseinrichtung (LEMF) in einem Telekommunikationssystem aus als Schnittstellen dienenden Verkehrsknoten im System in Zusammenhang steht, wobei der rechnerlesbare Programmcode im Herstellungsgegenstand umfasst:
- rechnerlesbaren Programmcode zum Identifizieren in der Vermittlungs- und Übermittlungsfunktion (MDF) einer Konfigurationsanfrage, die ein filterndes Kriterium umfasst, das den Typ der Daten, auf die zugegriffen werden soll, spezifiziert;
- rechnerlesbaren Programmcode zum Speichern des angefragten filternden Kriteriums in der Vermittlungs- und Übermittlungsfunktion (MDF);
- rechnerlesbaren Programmcode zum Empfangen von Daten (D1) vom System an das zentralisierte Speichermedium;
- rechnerlesbaren Programmcode zum Ermitteln, dass die empfangenen Daten mit dem filternden Kriterium übereinstimmen;
- rechnerlesbaren Programmcode zum Aufbewahren der empfangenen Daten (D1) im zentralisierten Speichermedium und/oder Weiterleiten der Daten an die Rechtspflege-Überwachungseinrichtung.

## Revendications

1. Procédé pour fournir un accès à des données reçues dans un support de mémoire centralisé faisant partie d'une Fonction de Médiation et de Délivrance (MDF) qui est associée à un équipement de Surveillance d'Application de la Loi (LEMF) dans un système de télécommunication en provenance de noeuds de trafic connectés dans le système,
lequel procédé comprend les étapes suivantes :
- identification dans la Fonction de Médiation et de Délivrance (MDF), d'une demande de configuration qui comprend des critères de filtrage spécifiant le type de données auxquelles on souhaite accéder ;
- configuration dans la Fonction de Médiation et de Délivrance (MDF), des critères de filtrage demandés ;
- réception de données (DI) en provenance du système à destination du support de mémoire centralisé ;
- établissement du fait que les données reçues correspondent aux critères de filtrage ;
- rétention des données reçues dans le support de mémoire centralisé et/ou réacheminement des données vers l'équipement de Surveillance d'Application de la Loi.

2. Procédé pour fournir un accès à des données reçues dans le support de mémoire centralisé selon la revendication 1, laquelle demande de configuration comprend en outre une demande de rétention indiquant que des données satisfaisant aux critères de filtrage configurés doivent être stockées dans le support de mémoire centralisé.

3. Procédé pour fournir un accès à des données reçues dans le support de mémoire centralisé selon la revendication 1 ou 2, laquelle demande de configuration est reçue en provenance de l'Équipement de Surveillance d'Application de la Loi (LEMF) et laquelle demande comprend en outre une demande d'abonnement indiquant que des données satisfaisant aux critères de filtrage configurés doivent être réacheminées à l'équipement de Surveillance d'Application de la Loi.

4. Procédé pour fournir un accès à des données reçues dans le support de mémoire centralisé selon la revendication 3, laquelle demande d'abonnement comprend en outre une demande de notification indiquant que seulement une notification de données satisfaisant aux critères de filtrage configurés doit être réacheminée vers l'équipement de Surveillance d'Application de la Loi (LEMF).

5. Procédé pour fournir un accès à des données reçues dans le support de mémoire centralisé selon la revendication 2, laquelle demande de configuration est reçue en provenance de l'Équipement de Surveillance d'Application de la Loi (LEMF) et lequel procédé comprend les étapes suivantes :
- réception dans la Fonction de Médiation et de Délivrance (MDF) en provenance de l'Équipement de Surveillance d'Application de la Loi, d'un ordre d'acquisition pour acquérir les données retenues (DI) ;
- réacheminement des données (DI) en provenance de la Fonction de Médiation et de Délivrance (MDF) vers l'Équipement de Surveillance d'Application de la Loi.

6. Procédé pour fournir un accès à des données reçues dans le support de mémoire centralisé selon la revendication 5 de sorte qu'une vérification de droits d'accès a lieu dans la Fonction de Médiation et de Délivrance (MDF) lors de la réception d'une demande de configuration ou d'un ordre d'acquisition.

7. Agencement pour fournir un accès à des données reçues dans un support de mémoire centralisé faisant partie d'une Fonction de Médiation et de Délivrance (MDF) qui est associée à un équipement de Surveillance d'Application de la Loi (LEMF) dans un système de télécommunication en provenance de noeuds de trafic connectés dans le système,
lequel agencement comprend :
- un moyen pour identifier dans la Fonction de Médiation et de Délivrance (MDF), une demande de configuration qui comprend des critères de filtrage spécifiant un type de données auxquelles on souhaite accéder ;
- un moyen pour configurer dans la Fonction de Médiation et de Délivrance (MDF), les critères de filtrage demandés ;
- un moyen pour recevoir des données (DI) en provenance du système à destination du support de mémoire centralisé ;
- un moyen pour établir le fait que les données reçues correspondent aux critères de filtrage ;
- un moyen pour retenir les données reçues dans le support de mémoire centralisé et/ou pour réacheminer les données vers l'Équipement de Surveillance d'Application de la Loi.

8. Agencement pour fournir un accès à des données reçues dans le support de mémoire centralisé selon la revendication 7, laquelle demande de configuration est reçue en provenance de l'Équipement de Surveillance d'Application de la Loi (LEMF) et lequel agencement comprend en outre :
- un moyen pour recevoir à la Fonction de Médiation et de Délivrance (MDF) en provenance de l'Équipement de Surveillance d'Application de la Loi, un ordre d'acquisition pour acquérir les données retenues (DI) ;
- un moyen pour réacheminer les données (DI) depuis la Fonction de Médiation et de Délivrance (MDF) jusqu'à l'Équipement de Surveillance d'Application de la Loi.

9. Agencement pour fournir un accès à des données reçues dans le support de mémoire centralisé selon la revendication 7 ou 8, lequel agencement comprend en outre :
- une Fonction de Demande (ManF) dans l'Équipement de Surveillance d'Application de la Loi (LEMF) attachée à une Fonction de Réception (ConF) dans la Fonction de Médiation et de Délivrance (MDF), lequel couple de fonctions est utilisé pour des processus d'interrogation ;
- une fonction de Réponse (NotF) dans la Fonction de Médiation et de Délivrance attachée à une Fonction d'Acquisition (LiAF) dans l'Équipement de Surveillance d'Application de la Loi, lequel couple de fonctions est utilisé pour des processus de Délivrance.

10. Agencement pour fournir un accès à des données reçues dans le support de mémoire centralisé selon la revendication 8, lequel agencement comprend en outre une Interface de Transfert Intercellulaire (HI) entre la Fonction de Demande et la Fonction de Réception et entre la Fonction de Réponse et la Fonction d'Acquisition.

11. Agencement pour fournir un accès à des données reçues dans le support de mémoire centralisé selon la revendication 7 ou 8, lequel agencement comprend un moyen pour vérifier des droits d'accès dans la Fonction de Médiation et de Délivrance (MDF) lors de la réception d'une demande de configuration ou d'un ordre d'acquisition.

12. Article pour fabrication comprenant une mémoire de mémoire de programme ayant un code de programme lisible par ordinateur incorporé en son sein pour fournir un accès à des données reçues dans un support de mémoire centralisé faisant partie d'une Fonction de Médiation et de Délivrance (MDF) qui est associée à un Équipement de Surveillance d'Application de la Loi (LEMF) dans un système de télécommunication en provenance de noeuds de trafic connectés dans le système, le code de programme lisible par ordinateur dans l'article pour fabrication comprenant :
- un code de programme lisible par ordinateur identifiant dans la Fonction de Médiation et de Délivrance (MDF), une demande de configuration qui comprend des critères de filtrage spécifiant un type de données auxquelles on souhaite accéder ;
- un code de programme lisible par ordinateur pour stocker dans la Fonction de Médiation et de Délivrance (MDF), les critères de filtrage demandés ;
- un code de programme lisible par ordinateur pour recevoir des données (DI) en provenance du système à destination du support de mémoire centralisé ;
- un code de programme lisible par ordinateur pour établir le fait que les données correspondent aux critères de filtrage configurés ;
- un code de programme lisible par ordinateur pour retenir les données reçues (DI) dans le support de mémoire centralisé et/ou pour réacheminer les données vers l'Équipement de Contrôle d'Application de la Loi.
